# EUROPEAN PATENT APPLICATION

(11) **EP 2 413 447 A2**
(43) Date of publication of application: **01.02.2012**
(21) Application number: 11174516.2
(22) Date of filing: 19.07.2011
(51) Int. Cl.: H02H 1/00, H02H 1/04

(54) **Method and apparatus for use in monitoring operation of electrical switchgear**

(30) Priority: 30.07.2010 US 847383
(71) Applicant: General Electric Company, Schenectady, NY 12345 (US)
(72) Inventor: SUTHERLAND, Peter Edward, Schenectady, NY New York 12306 (US)
(74) Representative: Gray, Thomas

(57) **Abstract**

An instrument transformer (100) including a current transformer (44) configured to be coupled to a load, and to generate an analog signal that is proportional to a current flowing through the load. The instrument transformer also includes a protection module (106) and a digitizer module (50) coupled to the current transformer, the digitizer module configured to receive an input signal that is proportional to the analog signal and to convert the input signal to a digital signal. The digitizer module includes a synchronization module (140) for generating at least one timing signal and a fiber optic interface module (136) coupled to the protection module and to the synchronization module for transmitting the digital signal to the protection module.

## Description

### BACKGROUND OF THE INVENTION

The present application relates generally to electrical switchgear, and more particularly, to a method and apparatus for use in monitoring operation of electrical switchgear.

In an industrial power distribution system, power generated by a power generation company may be supplied to an industrial or commercial facility for distribution within the industrial or commercial facility. At least some known power distribution systems use switchgear to divide the power into circuit branches which supply power to various portions of the industrial facility. Generally, circuit breakers are provided in each circuit branch to facilitate protecting equipment within the circuit branch. Additionally, circuit breakers in each circuit branch may facilitate minimizing equipment failures since specific loads may be energized or deenergized without affecting other loads.

At least some known circuit breakers use electronics to monitor the current flowing through the circuit branches, and to trip the breaker if the monitored current exceeds a predefined value. Known electronic circuit breakers are adjustable, and may include a protection module that is coupled to one or more current sensors. Such modules continuously monitor digitized current values and compare such values to curves that define permissible time frames in which both low-level and high-level overcurrent conditions may exist. For example, if an overcurrent condition has been maintained for longer than a predefined permissible time frame, the breaker is tripped. However, in some instances, the breakers may be inaccurately tripped, as accurate current readings may be affected by the measuring instruments themselves. For example, current transformer saturation may create errors, even when low-burden static relays are used.

At least some known circuit breakers use protection modules to monitor and control other types of faults, such as over- or under-voltage conditions and/or phase loss or imbalances. Such protection modules often require that raw electrical signals, such as those transmitted by instrument sensors, be translated into conditioned signals that are usable by the breaker protection modules. Accuracy in the measurement of the electrical parameters facilitates ensuring that power design limits are not exceeded, while equipment is maintained in service during transient conditions. To facilitate improved measurement accuracy, high quality and stable components may be used in the construction of protective instrumentation. However, such components increase production costs. Another technique used in improving accuracy requires compensating for known or estimated errors in the measurement ability of an instrument system. Once errors are quantified, a countervailing circuit may then be introduced to balance the errors out of the system. However, this technique is often difficult to implement and may lead to increased errors, or less predictable errors, being introduced into the system.

### BRIEF DESCRIPTION OF THE INVENTION

In one embodiment, an instrument transformer is provided that includes a current transformer configured to be coupled to a load, and to generate an analog signal that is proportional to a current flowing through the load. The instrument transformer also includes a protection module and a digitizer module that is coupled to the current transformer. The digitizer module is configured to receive an input signal that is proportional to the analog signal and to convert the input signal to a digital signal. The digitizer module includes a synchronization module for generating at least one timing signal and a fiber optic interface module coupled to the protection module and to the synchronization module for transmitting the digital signal to the protection module.

In another embodiment, a digitizer module is provided that is configured to be coupled to a current transformer and to a protection module. The digitizer module includes a current-to-voltage converter module that is configured to receive an input signal that is proportional to a signal generated by the current transformer and to convert the input signal to a voltage signal. The digitizer module also includes a synchronization module for generating at least one timing signal and a fiber optic interface module coupled to the protection module and to the synchronization module for transmitting the voltage signal to the protection module.

In yet another embodiment, a method of assembling an instrument transformer is provided that includes coupling a current transformer to a load, wherein the current transformer is configured to generate an analog signal that is proportional to a current flowing through the load. A digitizer module is coupled to the current transformer, wherein the digitizer module is configured to receive an input signal that is proportional to the analog signal and to convert the input signal to a digital signal. The digitizer module includes a synchronization module for generating at least one timing signal and a fiber optic interface module coupled to the synchronization module. A protection module is coupled to the digitizer module through the fiber optic interface module.

### BRIEF DESCRIPTION OF THE DRAWINGS

Fig. 1 is a schematic diagram of a known instrument transformer assembly.
Fig. 2 is a schematic diagram of an exemplary instrument transformer assembly that may be used in monitoring a switchgear.
Fig. 3 is a schematic diagram of an alternative embodiment of an instrument transformer assembly that may be used in monitoring a switchgear.
Fig. 4 is a schematic diagram of an exemplary instrument transformer that may be used with the instrument transformer assembly shown in Fig. 2 or Fig. 3.

### DETAILED DESCRIPTION OF THE INVENTION

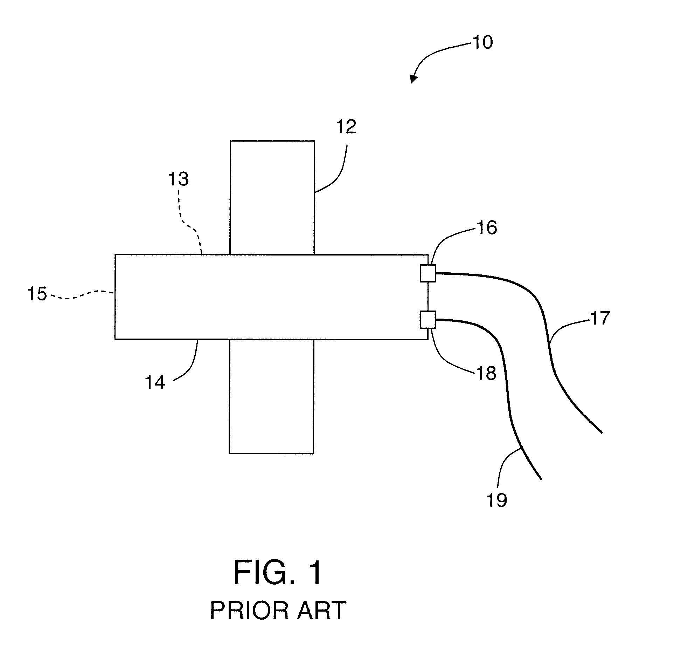

Fig. 1 is a schematic diagram of a known instrument transformer assembly 10. A primary conductor, or busbar 12 is positioned within an alternating current (AC) switchgear panel (not shown). Busbar 12 extends through a toroidal core 13 of a current transformer 14 such that busbar 12 and a plurality of electrical windings 15 within current transformer 14 are magnetically coupled together. Electrical terminations 16 and 18 couple current transformer 14 to conductors 17 and 19 respectively to transmit a signal generated by current transformer 14 to a measuring device (not shown).

During operation, an alternating current transmitted through busbar 12 induces a proportional current signal in windings 15 of current transformer 14. The current signal is transmitted via terminations 16 and 18 to conductors 17 and 19 which then transmit the current signal to a measuring device.

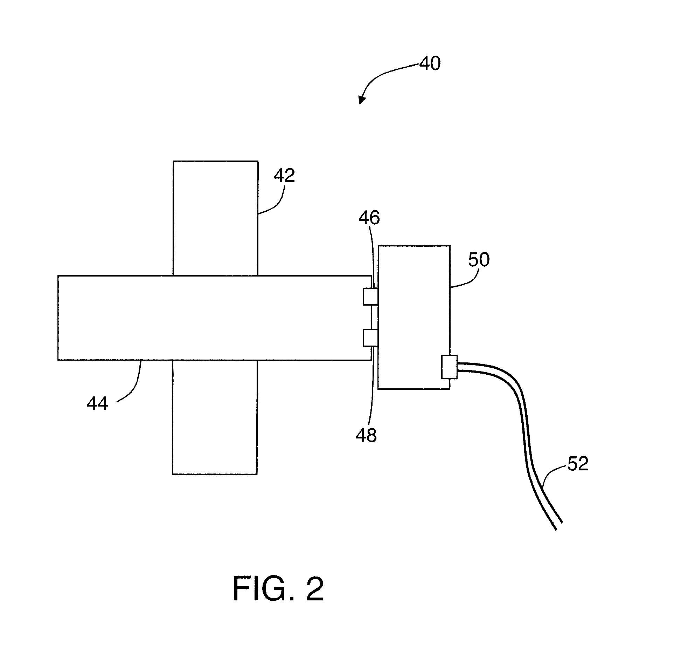

Fig. 2 is a schematic diagram of an exemplary instrument transformer assembly 40 that may be used in monitoring the operation of a switchgear (not shown). In the exemplary embodiment, a switchgear busbar 42 is a conductor that extends through, and that is magnetically coupled to, a current transformer 44. Electrical terminations 46 and 48 couple current transformer 44 to a digitizer module 50. In another embodiment, an auxiliary attachment (not shown) is used to couple digitizer module 50 to current transformer 44. Digitizer module 50, described in more detail below, produces an output that is transmitted through conduit 52 to a relay protection module (not shown in Fig. 2). In an alternative embodiment, digitizer module 50 may be coupled to other switchgear components, such as, for example, a limit switch, a timer, a transfer switch, a panel control and/or a display (none shown).

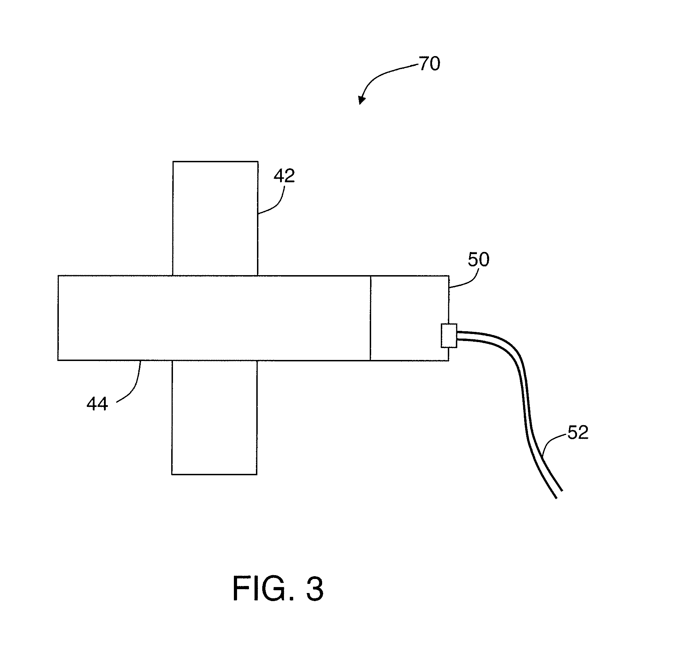

Fig. 3 is a schematic diagram of an alternative instrument transformer assembly 70 that may be used in monitoring a switchgear (not shown). Instrument transformer assembly 70 is similar to instrument transformer assembly 40 (shown in Fig. 2) and components in instrument transformer assembly 70 that are identical to components of instrument transformer assembly 40 are identified in Fig. 3 using the same reference numerals used in Fig. 2. Accordingly, in the exemplary embodiment, instrument transformer assembly 70 includes switchgear busbar 42 that extends through, and that is magnetically coupled to current transformer 44. Moreover, in the exemplary embodiment, and in contrast to Fig. 2, digitizer module 50 is formed integrally with current transformer 44. An output of digitizer module 50 is transmitted through conduit 52 to a relay protection module (not shown in Fig. 3). In an alternative embodiment, digitizer module 50 may be formed integrally with and/or coupled to other switchgear components, such as, for example, a limit switch, timer, transfer switch, panel control or display.

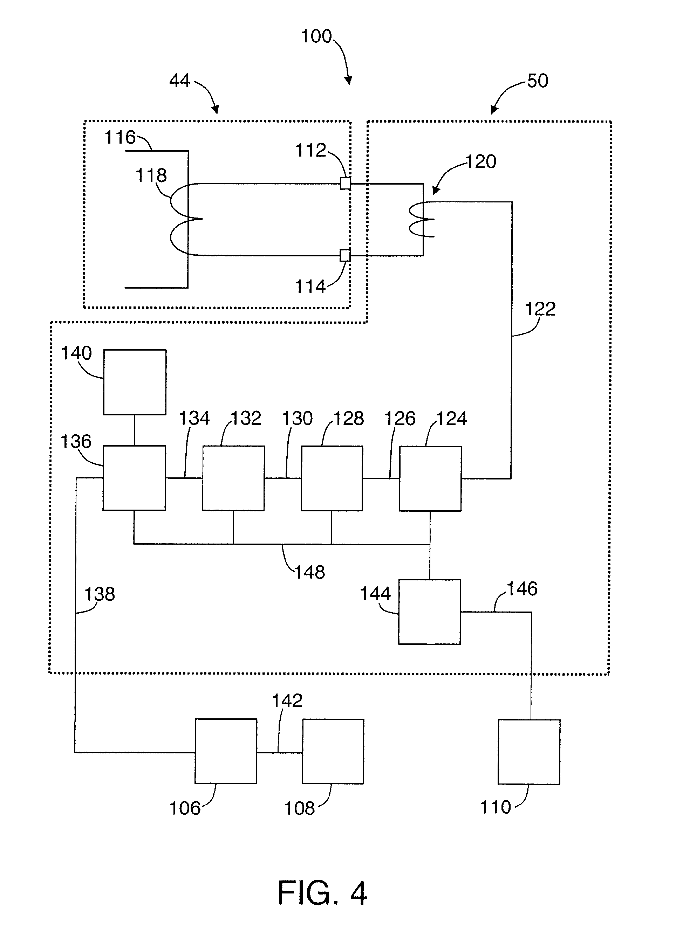

Fig. 4 is a schematic diagram of an instrument transformer 100 that may be used with instrument transformer assembly 40 or 70 (shown in Figs. 2 and 3, respectively). In the exemplary embodiment, instrument transformer 100 includes current transformer 44, digitizer module 50, a protection module 106, a user interface module 108, and a fiber optic power supply module 110. In one embodiment, current transformer 44 is a known current transformer that has been retrofitted to receive digitizer module 50. In the exemplary embodiment, terminals 112 and 114 couple digitizer module 50 to current transformer 44. A primary conductor 116 extends through, and is magnetically coupled to, a toroidal-shaped winding 118 of current transformer 44. In the exemplary embodiment, primary conductor 116 is a switchgear busbar or cable. A raw current signal from current transformer 44 is conducted to a step-down transformer 120 that reduces an amplitude of the raw current signal to an instrument signal that is suitable for processing within digitizer module 50.

In the exemplary embodiment, the instrument signal is transmitted via a conduit 122 to a current-to-voltage converter module 124 that converts the instrument signal to a voltage signal that is proportional to a current of the instrument signal. The voltage signal is transmitted via a conduit 126 to an analog-to-digital converter module 128 that digitizes the signal. The digitized signal is transmitted via a conduit 130 to a filter module 132 that band-pass filters the digitized signal to remove undesired low frequency and high frequency signal components from the digitized signal. Alternatively, filter module 132 may use any other filter, such as a low pass filter and/or a high pass filter, to remove undesired signal components from the digitized signal.

In the exemplary embodiment, filter module 132 transmits the filtered signal via a conduit 134 to fiber optic interface module 136. Fiber optic interface module 136 communicates with protection module 106 via fiber optic bus 138. The communication between fiber optic interface module 136 and protection module 106 is bi-directional, such that signal data is transmitted to protection module 106, and such that limit value and/or setup data are transmitted to fiber optic interface module 136. Because digitizer module 50 communicates with protection module 106 via fiber optic bus 138, digitizer module 50 facilitates electrically isolating current transformer 44 from protection module 106.

Moreover, in the exemplary embodiment, digitizer module 50 includes a synchronization module 140 that is coupled to fiber optic interface module 136. Additionally or alternatively, synchronization module 140 may be coupled to any other component within digitizer module 50 that enables instrument transformer 100 to function as described herein. In the exemplary embodiment, synchronization module 140 includes a clock unit and/or a global positioning satellite (GPS) unit (neither shown). The clock unit and/or the GPS unit provides timing signals for use in synchronizing voltage and/or current measurements. In the exemplary embodiment, fiber optic interface module 136 receives the timing signals and associates, or "timestamps" the timing signals with voltage measurement signals received. In one embodiment, fiber optic interface module 136 generates a plurality of synchrophasors based on the voltage measurement signals and/or the timing signals received. In the exemplary embodiment, the synchrophasors and/or the timestamped voltage signals are transmitted from fiber optic interface module 136 to protection module 106 and/or to user interface module 108.

Protection module 106, in the exemplary embodiment, receives the timestamped voltage signals and/or the synchrophasors via fiber optic bus 138 and selectively opens and closes at least one relay (not shown) based on the timestamped voltage signals and/or the synchrophasors received. Because the voltage signals and/or the synchrophasors include timing information, in addition to voltage information, the decision process of protection module 106 is more efficient and reliable regarding the opening and closing of the relays, in contrast to a protection module 106 that receives only voltage data, for example.

In the exemplary embodiment, user interface module 108 receives the timestamped voltage signals and/or the synchrophasors from protection module 106 via a conduit 142 and displays the signals and/or the synchrophasors to a user. In the exemplary embodiment, conduit 142 is a fiber optic conduit and/or bus. More specifically, in the exemplary embodiment, user interface module 108 displays the voltage signals and/or the synchrophasors in a time-based reference frame and/or such that the signals are synchronized with the timing signals. In one embodiment, user interface module 108 includes a thin screen module mounted to a user-accessible portion of a switchgear panel exterior (not shown). In another embodiment, user interface module 108 is remote, for example, in a central control room for use in remote monitoring of instrument transformer 100. Moreover, in the exemplary embodiment, user interface module 108 includes a user input portion (not shown), for example, a key pad, a touch screen, and/or a communications port. The communications port may be coupled to a personal computer or to another data processing device (not shown). User interface module 108 also includes a display (not shown) for displaying a status of instrument transformer 100, wherein the status may be, but is not limited to only being, an operational status, a fault status, self diagnostic results, and/or any other programmable status indication that enables instrument transformer 100 to function as described herein. In one embodiment, fiber optic bus 138 facilitates communication with a plurality of protection modules 106 and at least one user interface module 108.

Moreover, in the exemplary embodiment, fiber optic power supply module 110 supplies power to at least one component within digitizer module 50. More specifically, in the exemplary embodiment, fiber optic power supply module 110 supplies power to a fiber optic power supply 144 via a conduit 146. Fiber optic power supply 144 supplies power to current-to-voltage converter module 124, to analog-to-digital converter module 128, to filter module 132, and to fiber optic interface module 136 via a power bus 148. In one embodiment, fiber optic power supply module 110 is positioned within a switchgear panel (not shown) that is located proximate to user interface module 108. Alternatively, fiber optic power supply module 110 may be located in any location that enables instrument transformer 100 to function as described herein.

The flexibility of a fiber optic data communication path enables many systems to be monitored and controlled from a central location or from any number of remote locations. Fiber optic bus 138 and conduit 142 are not limited to a fiber optic architecture, but may be any of a wide array of communication bus architectures that include, but are not limited to only including, Ethernet, RS-485, and/or any other bus architecture that enables instrument transformer 100 to function as described herein. Moreover, fiber optic bus 138 and conduit 142 may use any communication protocol that includes, but is not limited to only including, profibus, profibus DP, TCP/IP, and/or any other communications protocol that enables instrument transformer 100 to operate as described herein.

The exemplary embodiment is described as an instrument transformer that includes a current transformer. However, instrument transformers based on other sensors may be incorporated in the same manner as described above. For example, voltage, frequency, temperature, infrared spectrum energy, vibration, and/or flow sensors, as well as interlocks and/or safety devices may be incorporated into the instrument transformer as described herein. In operation, coupling digitizer module 50 directly to current transformer 44 reduces an amount of copper wire required to manufacture switchgear. As such, the conduit material that is used by the exemplary instrument transformer to carry signals is manufactured from a fiber optic material. Accordingly, the exemplary instrument transformer may be manufactured in a more cost-effective manner as compared to known instrument transformers.

The current transformer and digitizer module described herein provide a robust and reliable apparatus for monitoring electrical switchgear. The fiber optic interface between the digitizer module and the protection module provides a lower impedance as compared to known switchgear monitoring equipment that uses copper wiring. Moreover, the synchronization module enables timing information to be correlated with the voltage signals produced by the digitizer module. The timing information facilitates synchronizing the voltage signals such that the protection module and/or a user may more efficiently and reliably protect switchgear components as compared to prior art systems without such synchronization. As such, the exemplary embodiment enables reliable and robust communication between the digitizer module and the protection module while facilitating reducing a power loss between the modules as compared to prior art systems.

A technical effect of the systems and method described herein includes at least one of: (a) coupling a current transformer to a load, wherein the current transformer is configured to generate an analog signal that is proportional to a current flowing through the load; (b) coupling a digitizer module to a current transformer, wherein the digitizer module is configured to receive an input signal that is proportional to an analog signal and to convert the input signal to a digital signal, and wherein the digitizer modules a synchronization module for generating at least one timing signal and a fiber optic interface module coupled to the synchronization module; and (c) coupling a protection module to a digitizer module through a fiber optic interface module.

The above-described instrument transformer is cost-effective and reliable. The instrument transformer includes a current transformer that is coupled to a digitizer module. The digitizer module converts, filters, and synchronizes a signal received from the current transformer with one or more timing signals. The digitizer module transmits and receives signal data to and from a protection module over a fiber optic conduit. As such, the digitizer module is electrically isolated from the protection module. Moreover, coupling the digitizer module directly to the current transformer and using a fiber optic bus rather than copper panel wire facilitates reducing a cost of manufacturing and/or of assembling the instrument transformer and/or the switchgear.

Exemplary embodiments of a method and apparatus for use in monitoring operation of electrical switchgear are described above in detail. The method and apparatus are not limited to the specific embodiments described herein, but rather, components of the apparatus and/or steps of the method may be utilized independently and separately from other components and/or steps described herein. For example, the instrument transformer may also be used in combination with other monitoring systems and methods, and is not limited to practice with only the switchgear as described herein. Rather, the exemplary embodiment can be implemented and utilized in connection with many other power system applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. An instrument transformer comprising:
   a current transformer configured to be coupled to a load, and to generate an analog signal that is proportional to a current flowing through the load;
   a protection module;
   a digitizer module coupled to said current transformer, said digitizer module configured to receive an input signal that is proportional to the analog signal and to convert the input signal to a digital signal, said digitizer module comprising:
      a synchronization module for generating at least one timing signal; and
      a fiber optic interface module coupled to said protection module and to said synchronization module for transmitting the digital signal to said protection module.
2. An instrument transformer in accordance with Clause 1, wherein said protection module selectively activates and deactivates at least one relay based on the digital signal.
3. An instrument transformer in accordance with Clause 1, wherein said digitizer module electrically isolates said current transformer from said protection module.
4. An instrument transformer in accordance with Clause 1, wherein said protection module is coupled to said fiber optic interface module via at least one fiber optic conduit.
5. An instrument transformer in accordance with Clause 1, wherein said digitizer module further comprises a current-to-voltage converter module coupled between said current transformer and said fiber optic interface module for converting the input signal to a voltage signal.
6. An instrument transformer in accordance with Clause 5, wherein said digitizer module further comprises an analog-to-digital converter module coupled to said current-to-voltage converter module for converting the voltage signal to a digital signal.
7. An instrument transformer in accordance with Clause 6, wherein said digitizer module further comprises a filter module coupled to said analog-to-digital converter module and to said fiber optic interface module for filtering the digital signal.
8. An instrument transformer in accordance with Clause 1, wherein said fiber optic interface module is configured to:
   associate the digital signal with the at least one timing signal; and
   transmit the associated signals to said protection module.
9. An instrument transformer in accordance with Clause 8, further comprising a user interface module, said protection module transmits the associated signals to said user interface module.
10. A digitizer module configured to be coupled to a current transformer and to a protection module, said digitizer module comprising:
   a current-to-voltage converter module configured to:
      receive an input signal that is proportional to a signal generated by the current transformer; and
      convert the input signal to a voltage signal;
      a synchronization module for generating at least one timing signal; and
      a fiber optic interface module coupled to the protection module and to said synchronization module for transmitting the voltage signal to the protection module.
11. A digitizer module in accordance with Clause 10, wherein said digitizer module electrically isolates the current transformer from the protection module.
12. A digitizer module in accordance with Clause 10, further comprising a step-down transformer coupled to the current transformer and to said current-to-voltage converter module for generating a signal that is proportional to the signal generated by the current transformer.
13. A digitizer module in accordance with Clause 10, further comprising an analog-to-digital converter module coupled to said current-to-voltage converter module for converting the voltage signal to a digital signal.
14. A digitizer module in accordance with Clause 13, further comprising a filter module coupled to said analog-to-digital converter module and to said fiber optic interface module for filtering the digital signal.
15. A digitizer module in accordance with Clause 13, wherein said fiber optic interface module is configured to:
   associate the digital signal with the at least one timing signal; and
   transmit the associated signals to the protection module.
16. A digitizer module in accordance with Clause 10, further comprising a fiber optic power supply for supplying power to at least one component within said digitizer module.
17. A method of assembling an instrument transformer, said method comprising:
   coupling a current transformer to a load, the current transformer configured to generate an analog signal that is proportional to a current flowing through the load;
   coupling a digitizer module to the current transformer, the digitizer module configured to receive an input signal that is proportional to the analog signal and to convert the input signal to a digital signal, the digitizer module including:
      a synchronization module for generating at least one timing signal; and
      a fiber optic interface module coupled to the synchronization module; and
      coupling a protection module to the digitizer module through the fiber optic interface module.
18. A method in accordance with Clause 17, further comprising coupling the protection module to the digitizer module via at least one fiber optic conduit.
19. A method in accordance with Clause 17, further comprising coupling a user interface module to the protection module.
20. A method in accordance with Clause 17, further comprising coupling a fiber optic power supply module to the digitizer module to provide power to at least one component within the digitizer module.

## Claims

1. An instrument transformer (100) comprising:
a current transformer (44) configured to be coupled to a load, and to generate an analog signal that is proportional to a current flowing through the load;
a protection module (106);
a digitizer module (50) coupled to said current transformer, said digitizer module configured to receive an input signal that is proportional to the analog signal and to convert the input signal to a digital signal, said digitizer module comprising:
a synchronization module (140) for generating at least one timing signal; and
a fiber optic interface module (136) coupled to said protection module and to said synchronization module for transmitting the digital signal to said protection module.

2. An instrument transformer (100) in accordance with Claim 1, wherein said protection module (106) selectively activates and deactivates at least one relay based on the digital signal.

3. An instrument transformer (100) in accordance with Claim 1 or 2, wherein said digitizer module (50) electrically isolates said current transformer (44) from said protection module (106).

4. An instrument transformer (100) in accordance with any of the preceding Claims, wherein said protection module (106) is coupled to said fiber optic interface module (136) via at least one fiber optic conduit (134).

5. An instrument transformer (100) in accordance with any of the preceding Claims, wherein said digitizer module (50) further comprises a current-to-voltage converter module (124) coupled between said current transformer (44) and said fiber optic interface module (136) for converting the input signal to a voltage signal.

6. An instrument transformer (100) in accordance with Claim 5, wherein said digitizer module (50) further comprises an analog-to-digital converter module (128) coupled to said current-to-voltage converter module (124) for converting the voltage signal to a digital signal.

7. An instrument transformer (100) in accordance with Claim 6, wherein said digitizer module (50) further comprises a filter module (132) coupled to said analog-to-digital converter module (128) and to said fiber optic interface module (136) for filtering the digital signal.

8. An instrument transformer (100) in accordance with any of the preceding Claims, wherein said fiber optic interface module (136) is configured to:
associate the digital signal with the at least one timing signal; and
transmit the associated signals to said protection module (106).

9. An instrument transformer (100) in accordance with Claim 8, further comprising a user interface module (108), said protection module (106) transmits the associated signals to said user interface module.

10. A method of assembling an instrument transformer, said method comprising:
coupling a current transformer to a load, the current transformer configured to generate an analog signal that is proportional to a current flowing through the load;
coupling a digitizer module to the current transformer, the digitizer module configured to receive an input signal that is proportional to the analog signal and to convert the input signal to a digital signal, the digitizer module including:
a synchronization module for generating at least one timing signal; and
a fiber optic interface module coupled to the synchronization module; and
coupling a protection module to the digitizer module through the fiber optic interface module.

11. A method in accordance with Claim 10, further comprising coupling the protection module to the digitizer module via at least one fiber optic conduit.

12. A method in accordance with Claim 10 or 11, further comprising coupling a user interface module to the protection module.

13. A method in accordance with any of Claims 10 to 12, further comprising coupling a fiber optic power supply module to the digitizer module to provide power to at least one component within the digitizer module.
